# EUROPÄISCHE PATENTSCHRIFT

(11) **EP 0 959 551 B1**
(45) Veröffentlichungstag und Bekanntmachung des Hinweises auf die Patenterteilung: **13.12.2006**
(21) Anmeldenummer: 99810343.6
(22) Anmeldetag: 23.04.1999
(51) Int. Cl.: H02K 3/40, H02K 3/30

(54) **Hochspannungsisolierte Statorwicklung**
High-Voltage-insulated stator winding
Enroulement statorique isolé contre la haute tension

(30) Priorität: 16.05.1998 DE 19822137
(43) Veröffentlichungstag der Anmeldung: 24.11.1999
(73) Patentinhaber: Alstom Technology Ltd, 5400 Baden (CH)
(72) Erfinder: Schuler, Roland, 5430 Wettingen (CH)

(56) Entgegenhaltungen:
- EP-A- 0 287 813
- EP-A- 0 287 814
- EP-A- 0 356 928
- PATENT ABSTRACTS OF JAPAN vol. 016, no. 570 (E-1297), 10. Dezember 1992 (1992-12-10) & JP 04 222431 A (MEIDENSHA CORP), 12. August 1992 (1992-08-12)

## Beschreibung

### TECHNISCHES GEBIET

Die vorliegende Erfindung bezieht sich auf das Gebiet der elektrischen Maschinen. Sie betrifft eine hochspannungsisolierte Statorwicklung mit wenigstens einem Statorwicklungsstab für eine elektrische Maschine, welcher Statorwicklungsstab von einer Wicklungsisolierung umgeben ist, die eine Mehrzahl von übereinander angeordneten Isolierschichten umfasst, wobei jede Isolierschicht aus einem auf einem Träger angeordneten Isoliermaterial, insbesondere in Form von Glimmerpapier, besteht.

Eine solche Statorwicklung, bei der als Träger für das Glimmerpapier ein Gewebe oder ein Vlies verwendet wird, ist aus dem Stand der Technik allgemein bekannt.

### STAND DER TECHNIK

Bei Hochspannungsgeneratoren, wie sie zur Stromerzeugung eingesetzt werden, oder Hochspannungsmotoren, besteht die Statorwicklung üblicherweise aus Wicklungsstäben, die in entsprechende Nuten im Statorblechpaket eingesetzt und dort fixiert werden. Zur Isolation gegen das Statorblechpaket ist die Statorwicklung von einer hochspannungsfesten Wicklungsisolierung umgeben, die als Band in mehrfachen Lagen um die Wicklungsstäbe herumgewickelt und anschliessend mit (lösungsmittelfreiem) Imprägnierharz durchtränkt wird. Das isolierende Wickelband besteht im wesentlichen aus Glimmerpapier, welches aus mechanischen Gründen auf einen Träger aufgebracht und mit diesem verbunden ist. Als Trägermaterial wird üblicherweise ein Gewebe oder Vlies aus Isoliermaterial (Glas- oder Kunststofffasern) verwendet. Der Träger stellt dabei zugleich die für die spätere Imprägnierung notwendigen Zwischenräume zur Verfügung.

Mit der EP 0287814 ist eine isolierte Stator- oder Rotorwicklung mit wenigstens einer von einer Wicklungsisolierung umgebenen Spule bekannt, die eine Mehrzahl von übereinander angeordneten Isolationsschichten umfasst. Jede Isolationsschicht ist auf zumindest einer ihrer Seiten mit einer Schutzschicht überzogen. Die Schutzschicht besteht aus einem Kunststofffilm, welcher einen Füllstoff enthält.

Die EP 0356928 A1 betrifft ein band- oder blattförmiges elektrisches Isoliermaterial in Form eines Films aus einem organischen Polymer mit Füller. Der Füller bildet einen Schutz gegen Koronaentladungen. Das Isoliermaterial kann in Wicklungen elektrischer Maschinen eingesetzt werden.

Bei einem vorgegebenen Material für die Wicklungsisolierung führen erhöhte Anforderungen an die Spannungsfestigkeit zu einer Erhöhung der Dicke der Isolierung bzw. der Anzahl der gewickelten Lagen. Mit der Erhöhung der Dicke verschlechtert sich aber gleichzeitig der Wärmeübergang zwischen der Wicklung und dem Statorblechpaket, was zu Problemen bei der Abfuhr der Verlustwärme führt. Darüber hinaus muss die Wicklung bei vorgegebener Geometrie des Stators mit einem geringeren Leiterquerschnitt ausgeführt werden, woraus eine Verringerung der erzeugten Leistung resultiert.

### DARSTELLUNG DER ERFINDUNG

Es ist Aufgabe der Erfindung, zur verbesserten Ausnutzung der Maschine eine Wicklungsisolierung zu schaffen, welche sich gleichermassen durch eine verbesserte dielektrische Ausnutzung (Spannungsfestigkeit) und eine verbesserte thermische Ausnutzung (Wärmebeständigkeit) auszeichnet.

Die Aufgabe wird bei einer Statorwicklung der eingangs genannten Art dadurch gelöst, dass der Träger dreischichtig aufgebaut ist, wobei eine Kernschicht, welche keinen Füllstoff enthält, die zwischen zwei Füllstoff enthaltenden Deckschichten angeordnet ist. Die Dicke der drei Schichten des Trägers beträgt jeweils etwa 1/3 der Dicke des Trägers. Die ungefüllte Kernschicht garantiert vor allem die mechanische Festigkeit, während die gefüllten Deckschichten den Träger auf der Oberfläche gegen Koronaentladungen schützen.

Eine bevorzugte Ausführungsform der erfindungsgemässen Statorwicklung, die sich in der Praxis bewährt hat, ist dadurch gekennzeichnet, dass die Wicklungsisolierung mit einem Imprägnierharz durchtränkt ist, dass zur Erleichterung des Imprägnierens zwischen den Isolierschichten Kanäle angeordnet sind, dass zur Bildung der Kanäle zwischen den Isolierschichten Zwischenlagen aus einem Gewebe, insbesondere aus Glasgewebe, angeordnet sind, dass das Verhältnis der Dicken einer Isolierschicht und einer Zwischenlage etwa 5:1 beträgt, und dass zwischen den Zwischenlagen jeweils mehrere Isolierschichten angeordnet sind, derart, dass die Anzahl der Isolierschichten und die Anzahl der Zwischenlagen insgesamt in einem Verhältnis von 5:1 stehen. Hierdurch wird eine ausreichende Imprägnierung ermöglicht, ohne dass die elektrischen und thermischen Eigenschaften der Wicklungsisolation unnötig verschlechtert werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Querschnitt den beispielhaften Aufbau eines Statorwicklungsstabes, wie er der Erfindung zugrundeliegt;
- Fig. 2: in einer vergrösserten Darstellung den Ausschnitt aus einer Wicklungsisolierung nach dem Stand der Technik mit Glimmerpapier auf einem gewebeartigen Träger;
- Fig. 3: in einer vergrösserten Darstellung den Ausschnitt aus einer Wicklungsisolierung gemäss einem bevorzugten Ausführungsbeispiel der Erfindung mit Glimmerpapier auf einem Träger aus einem modifizierten Kunststofffilm mit gewebeartigen Zwischenlagen; und
- Fig. 4: in einem gegenüber Fig. 3 vergrösserten Ausschnitt den inneren dreischichtigen Aufbau einer Isolierbandkombination gemäss einem anderen bevorzugten Ausführungsbeispiel der Erfindung.

### WEGE ZUR AUSFÜHRUNG DER ERFINDUNG

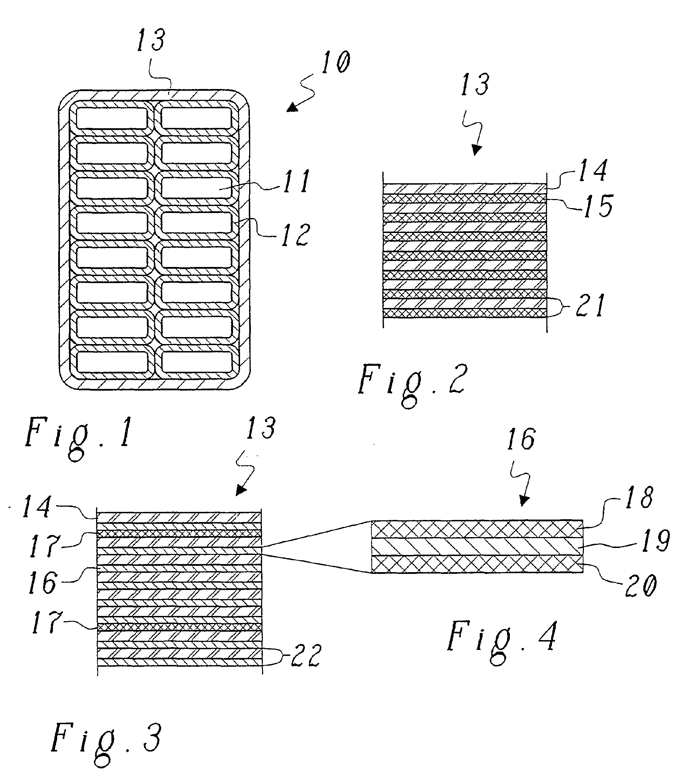

In Fig. 1 ist im Querschnitt der beispielhafte Aufbau eines Statorwicklungsstabes wiedergegeben, wie er der Erfindung zugrundeliegt. Der Statorwicklungsstab 10 hat einen im wesentlichen rechteckigem Querschnitt und umfasst eine Mehrzahl von eng gepackten Teilleitern 11 (z.B. aus Cu), die einzeln von einer Teilleiterisolierung 12 umgeben sind und ein Paket bilden, das insgesamt aussen von einer Wicklungsisolierung 13 umschlossen ist. Die Wicklungsisolierung 13 hat im Stand der Technik einen Aufbau, wie er im vergrösserten Ausschnitt in Fig. 2 dargestellt ist. Die Wicklungsisolierung 13 besteht demnach aus einer Vielzahl von übereinander gewickelten Isolierschichten 21 bzw. Isolierlagen. Jede Isolierschicht 21 besteht ihrerseits aus einer Schicht aus Glimmerpapier 14 und einer weiteren Schicht, nämlich einem Träger 15, der mit dem Glimmerpapier 14 flächig verbunden ist und der Isolierschicht 21 die notwendige mechanische Festigkeit gibt. Der Träger 15 besteht im Stand der Technik in der Regel aus einem vergleichsweise dicken Gewebe oder Vlies, wodurch die Packungsdichte des dielektrisch wirksamen Glimmerpapiers 14 herabgesetzt wird.

Als Träger 16 für das Glimmerpapier 14 wird bei den Isolierschichten 22 ein vergleichsweise dünner, modifizierter Kunststofffilm verwendet, der vorzugsweise aus einem thermisch hochwertigen Kunststofffilm aus Polyimid oder PEN besteht und als Füllstoff ein Metalloxid, insbesondere Aluminiumoxid, oder Bornitrid enthält (Fig. 3). Der Füllstoff sorgt dafür, dass der Kunststofffilm gegen Korona- bzw. Glimmentladungen widerstandsfähig ist. Ein geeigneter modifizierter Kunststofffilm ist beispielsweise von der Firma DuPont unter der Markenbezeichnung KAPTON CR im Handel erhältlich.

Der Füllstoff kann grundsätzlich gleichmässig in dem Film verteilt sein. Da der Füllstoff aber die mechanischen Eigenschaften des Films verschlechtert und hauptsächlich in den oberflächennahen Bereichen des Films benötigt wird, ist es besonders günstig, wenn erfindungsgemäss (Fig. 4) der einzelne Träger 16 dreischichtig aufgebaut ist, wobei eine Kernschicht 19, welche keinen Füllstoff enthält, zwischen zwei Füllstoff enthaltenden Deckschichten 18 und 20 angeordnet ist. Die Dicke der drei Schichten 18, 19 und 20 des Trägers 16 beträgt dabei jeweils etwa 1/3 der Dicke des Trägers 16. Ein solcher Film als Träger 16 erhöht vor allem die dielektrische Langzeitfestigkeit der Isolierung im Vergleich zur bekannten Gewebestruktur nach Fig. 2 je nach Isolierungsaufbau um ein Mehrfaches.

Nachteilig ist bei einer nur aus Glimmerpapier 14 und Filmträger 16 aufgebauten Isolierungsstruktur, dass die Struktur vor allem bei grösseren Dicken - wie sie für Hochspannungsgeneratoren üblich sind - nur schwer durchzuimprägnieren sind, weil der Filmträger 16 im Vergleich zum Gewebeträger 15 die Durchdringung der Isolierungsstruktur mit Imprägnierharz erschwert. Es ist daher von Vorteil, wenn gemäss Fig. 3 zur Erleichterung des Imprägnierens zwischen den Isolierschichten 22 feine Kanäle angeordnet sind, die durch zwischen den Isolierschichten 22 angeordnete Zwischenlagen 17 aus einem feinen Gewebe, insbesondere aus Glasgewebe, gebildet werden. Das Verhältnis der Dicken einer Isolierschicht 22 und einer Zwischenlage 17 beträgt dabei vorzugsweise etwa 5:1. Für eine sichere Durchtränkung der Wicklungsisolierung 13 reicht es dabei aus, wenn zwischen den Zwischenlagen 17 jeweils mehrere Isolierschichten 22 angeordnet sind, derart, dass die Anzahl der Isolierschichten 21 und die Anzahl der Zwischenlagen 17 insgesamt in einem Verhältnis von 5:1 stehen. Die Zwischenlagen 17 erleichtern nicht nur die Durchtränkung, sondern verstärken darüber hinaus die fertige Isolierungsstruktur auch mechanisch.

Bei kleinen Dicken der Wicklungsisolierung 13 kann auf die Zwischenlagen 17 aber auch ganz verzichtet werden.

Insgesamt ergibt sich mit der Erfindung eine Statorwicklung mit einer hinsichtlich der dielektrischen und thermischen Eigenschaften stark verbesserten Wicklungsisolierung.

### BEZUGSZEICHENLISTE

- 10: Statorwicklungsstab
- 11: Teilleiter
- 12: Teilleiterisolierung
- 13: Wicklungsisolierung
- 14: Glimmerpapier
- 15: Träger (z.B. Gewebe)
- 16: Träger (modifizierter Kunststofffilm)
- 17: Zwischenlage (Glasgewebe)
- 18,20: Deckschicht
- 19: Kernschicht
- 21: Isolierschicht (Stand der Technik)
- 22: Isolierschicht (gemäss Erfindung)

## Patentansprüche

1. Hochspannungsisolierte Statorwicklung mit wenigstens einem Statorwicklungsstab (10) für eine elektrische Maschine, welcher Statorwicklungsstab (10) von einer Wicklungsisolierung (13) umgeben ist, die eine Mehrzahl von übereinander angeordneten Isolierschichten (22) umfasst, wobei jede Isolierschicht (22) aus einem auf einem Träger (16) angeordneten Isoliermaterial, insbesondere in Form von Glimmerpapier (14), besteht, wobei als Träger (16) ein wärmebeständiger Kunststofffilm verwendet wird, welcher durch Einlagerung eines gegen Koronaentladungen widerstandsfähigen Füllstoffes modifiziert ist, **dadurch gekennzeichnet, dass** der Träger (16) dreischichtig aufgebaut ist, wobei eine Kernschicht (19), welche keinen Füllstoff enthält, zwischen zwei Füllstoff enthaltenden Deckschichten (18, 20) angeordnet ist.

2. Statorwicklung nach Anspruch 1, **dadurch gekennzeichnet, dass** die Dicke der drei Schichten (18, 19, 20) des Trägers (16) jeweils etwa 1/3 der Dicke des Trägers (16) beträgt.

3. Statorwicklung nach Anspruch 1 oder 2, **dadurch gekennzeichnet, dass** innerhalb der Isolierschichten (22) das Verhältnis der Dicken von Isoliermaterial (14) zu Träger (16) etwa 2:1 beträgt.

4. Statorwicklung nach einem der Ansprüche 1 bis 3, **dadurch gekennzeichnet, dass** die Wicklungsisolation (13) mit einem Imprägnierharz durchtränkt ist.

5. Statorwicklung nach Anspruch 4, **dadurch gekennzeichnet, dass** zur Erleichterung des Imprägnierens zwischen den Isolierschichten (22) Kanäle angeordnet sind.

6. Statorwicklung nach Anspruch 5, **dadurch gekennzeichnet, dass** zur Bildung der Kanäle zwischen den Isolierschichten (22) Zwischenlagen (17) aus einem Gewebe, insbesondere aus Glasgewebe, angeordnet sind.

7. Statorwicklung nach Anspruch 6, **dadurch gekennzeichnet, dass** das Verhältnis der Dicken einer Isolierschicht (22) und einer Zwischenlage (17) etwa 5:1 beträgt.

8. Statorwicklung nach Anspruch 6 oder 7, **dadurch gekennzeichnet, dass** zwischen den Zwischenlagen (17) jeweils mehrere Isolierschichten (22) angeordnet sind, derart, dass die Anzahl der Isolierschichten (22) und die Anzahl der Zwischenlagen (17) insgesamt in einem Verhältnis von 5:1 stehen.

## Claims

1. High-voltage insulated stator winding having at least one stator winding bar (10) for an electrical machine, which stator winding bar (10) is surrounded by winding insulation (13) which comprises a plurality of insulating layers (22) arranged one above the other, in which case each insulating layer (22) is composed of an insulating material arranged on a base (16), in particular in the form of Mica paper (14), wherein a heat-resistant plastic film is used as the base (16), which plastic film is modified by introducing a filler which can resist corona discharges,
**characterized in that** the base (16) is formed from three layers, in which case a core layer (19), which contains no filler, is arranged between two covering layers (18, 20) which contain filler.

2. Stator winding according to Claim 1, **characterized in that** the thickness of each of the three layers (18, 19, 20) of the base (16) is about 1/3 of the thickness of the base (16).

3. Stator winding according to Claim 1 or 2, **characterized in that** the ratio of the thicknesses of the insulating material (14) to the base (16) within the insulating layers (22) is about 2:1.

4. Stator winding according to one of Claims 1 to 3, **characterized in that** the winding insulation (13) is impregnated with an impregnation resin.

5. Stator winding according to Claim 4, **characterized in that** channels are arranged between the insulating layers (22), in order to simplify the impregnation.

6. Stator winding according to Claim 5, **characterized in that** intermediate layers (17) composed of a fabric, in particular a glass fabric, are arranged between the insulating layers (22), in order to form the channels.

7. Stator winding according to Claim 6, **characterized in that** the ratio of the thicknesses of an insulating layer (22) and an intermediate layer (17) is about 5:1.

8. Stator winding according to Claim 6 or 7, **characterized in that** in each case a plurality of insulating layers (22) are arranged between the intermediate layers (17), in such a manner that the overall ratio of the number of insulating layers (22) to the number of intermediate layers (17) is 5:1.

## Revendications

1. Enroulement de stator à isolation haute tension, qui présente au moins un barreau (10) d'enroulement de stator pour une machine électrique, lequel enroulement (10) d'enroulement de stator est entouré par une isolation d'enroulement (13) qui comporte plusieurs couches isolantes (22) disposées les unes au-dessus des autres, chaque couche isolante (22) étant constituée d'un matériau isolant qui présente en particulier la forme de papier micacé (14) disposé sur un support (16), et dans lequel on utilise comme support (16) un film en matière synthétique résistant à la chaleur qui est modifié par incorporation d'une charge qui résiste aux décharges corona, **caractérisé en ce que** le support (16) présente une structure en trois couches dans laquelle une couche d'âme (19) qui ne contient pas de charge est disposée entre deux couches de recouvrement (18, 20) qui contiennent une charge.

2. Enroulement de stator selon la revendication 1, **caractérisé en ce que** l'épaisseur de chacune des trois couches (18, 19, 20) du support (16) représente environ 1/3 de l'épaisseur du support (16).

3. Enroulement de stator selon les revendications 1 ou 2, **caractérisé en ce qu'**à l'intérieur des couches isolantes (22), le rapport entre l'épaisseur du matériau isolant (14) et celle du support (16) est d'environ 2 : 1.

4. Enroulement de stator selon l'une des revendications 1 à 3, **caractérisé en ce que** l'isolation d'enroulement (13) est imprégnée par une résine d'imprégnation.

5. Enroulement de stator selon la revendication 4, **caractérisé en ce que** pour faciliter l'imprégnation, des canaux sont disposés entre les couches isolantes (22).

6. Enroulement de stator selon la revendication 5, **caractérisé en ce que** pour former les canaux, on dispose entre les couches isolantes (22) des couches intermédiaires (17) en un tissu et en particulier en tissu de verre.

7. Enroulement de stator selon la revendication 6, **caractérisé en ce que** le rapport entre l'épaisseur d'une couche isolante (22) et celle d'une couche intermédiaire (17) est d'environ 5 : 1.

8. Enroulement de stator selon les revendications 6 ou 7, **caractérisé en ce qu'**en tous cas entre les couches intermédiaires (17) sont disposées plusieurs couches isolantes (22), de telle sorte que le nombre des couches isolantes (22) et le nombre des couches intermédiaires (17) soient globalement dans un rapport de 5 : 1.
